# EUROPEAN PATENT SPECIFICATION

(11) **EP 0 458 470 B1**
(45) Date of publication and mention of the grant of the patent: **24.01.1996**
(21) Application number: 91303804.8
(22) Date of filing: 26.04.1991
(51) Int. Cl.: C08G 69/00

(54) **Polyamide resin, and polyamide resin compositions**
Polyamidharz und Polyamidharz-Zusammensetzungen
Résine polyamide et compositions à base de cette résine

(30) Priority: 21.05.1990 US 525598; 16.10.1990 US 596913
(43) Date of publication of application: 27.11.1991
(73) Proprietor: MITSUBISHI GAS CHEMICAL COMPANY, INC., Tokyo, 100 (JP)
(72) Inventor: Takeda, Yuji, Austin, Texas 78705 (US)
(74) Representative: Cresswell, Thomas Anthony

(56) References cited:
- JP-A-62 223 261
- PATENT ABSTRACTS OF JAPAN, vol 14, no. 37, 24th January 1990; & JP-A-01 272 662
- CHEMICAL ABSTRACTS, vol. 89, no. 22, 27th November 1978, page 3, abstract no. 180411d, Columbus, Ohio, US; K. SEIFFARTH et al.: "Copolyamides of nylon 6 based on aralkyldiamines"
- Kunststoff-Handbuch, Bd.VI "Polyamide", Kapitel 2.10.3 u. 3.3.7

## Description

### (Technical field of the Invention)

This invention relates to a novel polyamide resin formed by melt-kneading a polyamide resin mixture consisting of polyamide-6 and a polyamide resin composed of xylylenediamine and α,ω-linear aliphatic dibasic acid to perform a reaction so that the polyamide resin comes to have a glass transition temperature or temperatures within a certain range; and also a novel polyamide resin composition for molding, which is formed by blending said polyamide resin with a specific elastomer.

More particularly, the invention relates to a polyamide resin composition for molding excelling in such physical properties as impact strength, mechanical strength, modulus, chemical resistance and processing stability and being suitable for automotive, electric and electronic usages.

### (Background of the Invention)

Polyamide resins composed of xylylenediamine and C₆ - C₂₀ α,ω-linear aliphatic dibasic acids (hereinafter will be referred to as "MX nylon") possess excellent chemical resistance, tensile strength and modulus of elasticity, but have low impact strength and are apt to cause brittle fracture at normal temperatures. Due to this defect little industrial value has been found in use of MX nylon alone.

Again polyamides such as polyamide-6, polyamide-66 and the like are short of impact strength if used by themselves, and various proposals have been made to improve that property.

On the other hand, as a means for improving impact strength of these polyamide resins, a resin obtained by simply blending MX nylon with above polyamide, especially a blend resin prepared by melting and kneading these polyamide resins at the extrusion temperature conditions employed in an ordinary molding machine, was made the subject of a patent application (U. S. patent application Serial No. 525,598).

However, MX nylon and polyamide-6 are essentially scanty of compatibility with each other, and it is impossible to obtain molded articles of high mechanical strength from such simple blends.

Attempts to blend a specific elastomer with a polyamide resin have also been made.

British Patent 998,439 discloses a thermoplastic resin composition composed of 50 - 99 % by weight of a linear polyamide and 50 - 1 % by weight of an olefin copolymer particles, said olefin copolymer containing 0.1 - 10 mol% of an acid group(s).

U. S. Patent 3,845,163 shows a resin composition which is an ionic copolymer formed by blending a polyamide with an α-olefin/α,β-ethylenically unsaturated carboxylic acid copolymer with the view to improve toughness of the molded articles, at least 10 % of the acid group of said α, β-ethylenically unsaturated carboxylic acid being neutralized with a metallic ion(s).

The compositions disclosed in these patents, however, are still insufficient as to impact strength. Thus heretofore no attempts to improve the impact strength were made to blend MX nylon, which especially has low hygroscopicity and exhibits excellent dimensional stability after molding, with other polyamide resin to form a polymer alloy .

The main object of the present invention therefore resides in the provision of a polyamide resin for molding, which is free of above-described defects and exhibits excellent performance in impact resistance, mechanical strength, dimensional stability, chemical resistance and processability, and also in the provision of a polyamide resin composition formed by blending the polyamide resin with an elastomer.

### (Summary of the Invention)

According to the present invention, there are provided a polyamide resin which comprises a molten reaction mixture composed of 10 to 90 % by weight of a polyamide (A1) prepared from xylylenediamine and a C₆-C₂₀ α, ω-linear aliphatic dibasic acid and 90 to 10% by weight of polyamide-6 (A2), and which is characterized in that it has either a single glass transition temperature differing from that of both (A1) and (A2), or has two glass transition temperatures differing from that of both (A1) and (A2), the difference between the two temperatures being less than 10°C (the glass transition temperature being measured by the DSC process at a temperature rise rate of 20°C/min); and
a toughened polyamide resin composition comprising 100 parts by weight of (A) above polyamide resin and 5 to 80 parts by weight of (B) an elastomer composed mainly of a block copolymerized elastomer which has been modified with an unsaturated dicarboxylic acid or a derivative thereof and hydrogenated.

### (Description of the Preferred Embodiment)

### Polyamide resin (A):

The polyamide resin (A) of this invention is composed of a molten reaction mixture obtained by melting MX nylon (A1) and polyamide-6 (A2) under specific (temperature and time) conditions to cause their reaction, said resin having a specific glass transition temperature or temperatures.

The reactions that progress under the molten condition are mainly of the following 1) - 3) types.

### Acidolysis:

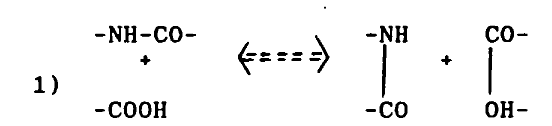

### Aminolysis:

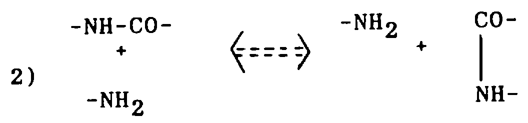

### Amidolysis:

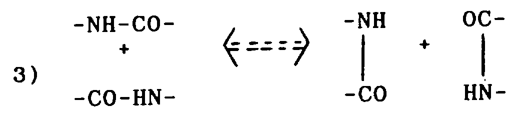

State of progress of above reaction can be known from NMR absorption spectrum. The progress of the reaction in the molten condition can be also known by measuring the glass transition temperature of the polyamide resin which is the reaction mixture in molten state.

With progress of the reaction, the difference in glass transition temperatures of MX nylon and polyamide-6 becomes increasingly less and at a certain point of time the mixture comes to have a single glass transition temperature.

The polyamide resin (A) obtained through the reaction in molten state exhibits improved heat resistance, dimensional stability and mechanical properties such as modulus of elasticity and yield stress.

Polyamide resin (A) of the present invention is obtained through the above-described reaction. As the reaction between MX nylon and polyamide-6 progresses, ultimately the reaction mixture comes to show a single glass transition temperature as aforesaid. The polyamide resin (A) of the present invention includes not only the product in so advanced stage of the reaction that it has a single glass transition temperature but also those at earlier stages of the reaction having two glass transition temperatures, provided the difference between the two temperatures is less than 10°C. Such polyamide resins (A) commonly exhibit satisfactorily improved mechanical properties such as impact strength.

Polyamide resin (A) of the present invention can be used as a molding resin upon blending it with fillers such as glass fiber, glass beads, calcium carbonate, mica, potassium titanate, carbon fiber, etc.

### a) MX nylon:

The polyamide resin (A1) composed of xylylenediamine and α,ω-linear aliphatic dibasic acid, viz., MX nylon, to be used in the present invention includes polyamide resins formed by polycondensation of, as the diamine component, metaxylylenediamine alone or a xylylenediamine mixture of at least 60 % by weight of metaxylylenediamine and not more than 40 % by weight of paraxylylenediamine with, as the acid component, an α,ω-linear aliphatic dibasic acid having 6 to 20 carbon atoms, preferably 6 to 12 carbon atoms, such as adipic acid, sebacic acid, suberic acid, dodecanedioic acid and eicodioic acid, adipic acid being the most preferred.

Preferably, the MX nylon has a number average molecular weight of 10,000 to 50,000, especially 14,000 to 25,000.

### b) Polyamide-6:

Polyamide-6 (A2) to be used in combination with MX nylon according to this invention is a ring-opening polymer of caprolactam preferably having a number average molecular weight of 10,000 to 50,000, particularly 14,000 to 30,000.

### c) Mixing proportions of MX nylon and polyamide-6:

Based on the total weight of the MX nylon and the polyamide-6, the amount of MX nylon is 10 to 90 % by weight, preferably 20 to 80 % by weight, and the amount of the polyamide-6 is 90 to 10 % by weight, preferably 80 to 20 % by weight. The resin composition for molding comprising these components at the aforesaid proportion has excellent impact strength.

### d) Reaction of MX nylon with polyamide-6 in molten condition:

If MX nylon and polyamide-6 are dry-blended under ordinary conditions and melt-kneaded, the resultant polyamide resin mixture becomes a pearl-colored, non-transparent composition because MX nylon and polyamide-6 are not easily compatible with each other.

However, polyamide resin (A) obtained through the reaction in molten state according to the present invention is a product of a reaction in the molten state of MX nylon and polyamide-6 at a specific temperature for a specific time. The product is in relatively advanced stage of the reaction and exhibits improved mechanical characteristics.

For example, through the steps of dry-blending 50 parts by weight of polymetaxylylene adipamide as MX nylon with 50 parts by weight of polyamide-6 and melt-kneading the blend in the cylinder of an injection-molding machine at 260°C for 30 minutes or at 290° C for 3 minutes, a polyamide resin having a single glass transition temperature differing from that of either of polymetaxylylene adipamide and polyamide-6 can be obtained.

When the reaction in molten state is further advanced, the (single) glass transition temperature gradually shifts to lower side, with which heat resistance of the resin tends to gradually decrease. Hence, it is preferable that the polyamide resin (A) having improved mechanical properties of the present invention has a single glass transition temperature which is not lower than its initial single glass transition temperature (Tg1) by 5° C or more.

### Polyamide resin composition

The polyamide resin composition of the present invention is prepared by blending a specific elastomer (B) with the above polyamide resin (A).

As already stated, the polyamide resin (A) exhibits improved heat resistance, dimensional stability and mechanical properties. By blending such polyamide resin (A) with a specific elastomer, state of dispersion of the elastomer can be drastically improved compared to the cases of blending the elastomer with MX nylon or polyamide-6 alone, or with a simple blend of those two polyamides, and a composition of markedly improved impact strength can be obtained.

The polyamide resin composition of the present invention excels in heat stability as well as in resistance to thermal deformation, impact resistance and rigidity at well-balanced proportions, and is useful as an industrial material in electronic and electric fields as well as that for automobiles.

According to the present invention, the elastomer to be blended with the polyamide resin (A) is, for example, an elastomer selected from the group consisting of a copolymer derived from unsaturated compounds such as olefins, dienes and vinyl aromatic compounds, an ionomer, i.e. a metal salt of a copolymer of an ethylenic compound and an unsaturated dicarboxylic acid, and a block copolymerized elastomer. These elastomer may have been modified with an unsaturated dicarboxylic acid or a derivative thereof and/or hydrogenated.

Of these elastomers, those preferred as a toughener to be blended with the polyamide resin (A) of the present invention are the block copolymerized elastomers composed of polymer blocks (B1) consisting essentially of vinyl aromatic compound units and polymer blocks (B2) consisting essentially of conjugated diene compound units, which have been modified with unsaturated dicarboxylic acids or derivatives thereof and hydrogenated.

### a) The polymer block (B1) consisting chiefly of vinyl aromatic compound units:

The vinyl aromatic compounds constituting the polymer block (B1) include those expressed by the following formula: 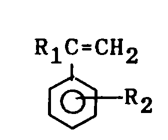 in which R₁ and R₂ represent independently from each other a hydrogen atom or a C₁ - C₅ alkyl group. Specifically, styrene, α-methylstyrene, vinyltoluene, p-tert.-butylstyrene, etc. may be named, styrene being the most preferred.

These vinyl aromatic compounds may be used alone or in combination of more than one.

The polymer block (B1) may be of a homopolymer of the above vinyl aromatic compound or compounds only, while it may also contain a minor amount, eg., up to 30 % by weight of the polymer block (B1), of other monomeric units such as of ethylene , propylene or butadiene.

The polymer block (B1) can preferably have a number average molecular weight of 4,000-115,000, inter alia, 5,000-15,000.

### b) The polymer block (B2) consisting chiefly of conjugated diene compound units:

The polymer block (B2) may consist of conjugated diene compound units only, or may be a copolymer of a major amount of conjugated diene compound units and a minor amount of olefin units.

The conjugated diene compounds include those expressed by the following formula: 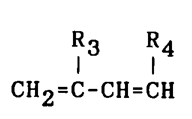 in which R₃ and R₄ represent independently from each other a hydrogen atom or a C₁ - C₅ alkyl group. Specifically, butadiene, isoprene, 1,3-pentadiene and 2,3-dimethyl-1,3-butadiene may be named by way of examples, of which butadiene and isoprene are the most preferred.

Those conjugated diene compounds can be used either alone or in combination of more than one.

Examples of other olefins which can be copolymerized with above conjugated diene compound or compounds include α-olefins having 2 to 10 carbon atoms, preferably 2 to 5 carbon atoms, such as ethylene, propylene, isobutylene, and 1-pentene.

The molecular weight of polymer block (B2) is not critical, which is preferably within the range of 20,000-450,000, preferably 25,000-100,000, as number average molecular weight.

### Block copolymer:

The sequence of arranging the blocks (B1) and (B2) in the block copolymer (B) is optional. For example, the following sequences may be employed: (B1)-(B2), (B1)-(B2)-(B1), (B2)-(B1)-(B2), (B1)-(B2)-(B1)-(B2), (B1)-(B2)-(B1)-(B2)-(B1), (B2)-(B1)-(B2)-(B1)-(B2). The copolymers may be composed of mixtures of these sequences.

In the present invention, particularly (B1)-(B2)-(B1) type block copolymers are preferred.

The ratio of the block (B1) to block (B2) in the block copolymer is not critical, but is variable over a wide range. Preferably the weight ratio of block (B1) to block (B2) is within the range of from 15/85 to 60/40, more preferably from 20/80 to 50/50, inter alia, from 20/80 to 40/60.

Such block copolymers can be prepared by the methods known per se.

The block copolymers may be subjected to modification with an unsaturated dicarboxylic acid or derivatives thereof and/or hydrogenation.

The order of performing these two treatments is optional, but normally the hydrogenation is conveniently conducted prior to the modification.

The preferred unsaturated dicarboxylic acids used to modify the block copolymer -are those containing 4 to 16 carbon atoms, particularly 4 to 9, eg., maleic, fumaric, itaconic, citraconic, cis-4-cyclohexane-1,2-dicarboxylic and endo-cis-bicyclo-[2,2,1]-5-heptene-2,3-dicarboxylic acids. Useful derivatives of these acids may be their anhydrides. Of these, particularly maleic anhydride is preferred.

Modification of the block copolymers with these unsaturated dicarboxylic acids or their derivatives can be effected by the methods known per se. For example, it can be conducted by performing an addition reaction of such an unsaturated dicarboxylic acid or a derivative thereof to the block copolymer in solution or in molten state in the presence or absence of a radical initiator.

The amount of the unsaturated dicarboxylic acid or its derivative to be added to the block copolymer is generally 0.01 to 10 parts by weight, preferably 0.1 to 5 parts by weight, especially 0.1 to 3 parts by weight, per 100 parts by weight of the copolymer.

The block copolymer which has been modified as above is also hydrogenated by known methods. The degree of hydrogenation is such that at least 70 %, preferably at least 80 %, of the aliphatic double bonds present in the copolymer block (B2) are hydrogenated.

The modified and hydrogenated elastomer imparts excellent weatherability to the polyamide resin composition of the present invention.

It is possible that when the above hydrogenation takes place, a part of the aromatic double bonds in the polymer block (B1) are also hydrogenated. In this case, the amount of hydrogenated aromatic double bonds should desirably be controlled so as to be 20 % or below, more preferably 10 % or below, based on the total amount of aromatic double bonds present. Determination of aliphatic and aromatic double bonds can be conducted by means of instrumental analysis such as infrared absorption spectrum (IR) or chemical analysis such as iodometry.

The modified and hydrogenated block copolymer obtained as above may have a number average molecular weight of preferably 25,000 to 200,000, particularly 30,000 to 150,000.

The modified and hydrogenated block copolymers to be used in the present invention may include those commercially available, for example, "KRATON® FG1901X" of Shell Chemical Co., Ltd.

### Preparation of the polyamide resin composition of the present invention:

The polyamide resin composition of the present invention can be prepared by, for example, melt-kneading the polyamide resin (A) obtained by reacting MX nylon with polyamide-6 in molten state, with the modified and hydrogenated block copolymer, viz., the elastomer (B).

As an alternative method, the composition can be prepared through the steps of first melt-kneading the polyamide (A1) with the elastomer (B) and then melt-kneading the resulting composition with polyamide-6 (A2); or conversely, first melt-kneading polyamide-6 (A2) with the elastomer (B) and then melt-kneading the resulting composition with the polyamide (A1).

The modified and hydrogenated block copolymerized elastomer is blended with the molten reaction product of MX nylon with polyamide-6, viz., the polyamide resin (A), at a ratio of 5 - 80 parts, preferably 10 - 50 parts, inter alia, 15 - 40 parts. per 100 parts of the molten reaction product, the parts being by weight, whereby to drastically improve impact strength and other properties of the polyamide resin composition.

If required, the polyamide resin composition of the present invention may further be blended with polyamide-66, which contributes to improve moldability of the polyamide resin composition of the present invention, whereby shortening the cycle time in molding operation.

Preferred amount of the polyamide-66 to be blended is 1 - 30 parts, more preferably 3 - 15 parts, per 100 parts of MX nylon, the parts being by weight.

To the polyamide resin composition of this invention, still other additives such as stabilizers against degradation by oxidation, heat or ultraviolet rays, nucleating agent, plasticizer, releasing agent, fire retardant, antistatic agent, lubricant, etc. may be suitably blended.

The polyamide resin composition of this invention can be prepared by melt-kneading the polyamide or polyamide composition with the modified hydrogenated block copolymerized elastomer in, for example, a twin-screw extruder at a temperature higher than the melting point or flow-initiating point of the polyamide or polyamide composition by 5 to 50° C.

The polyamide resin composition prepared in accordance with the present invention excels particularly in impact strength, and exhibits high thermal stability during processing, mechanical strength, chemical resistance, rigidity, etc. It is therefore extremely useful for automobile, electrical and electronical applications.

Hereinafter the present invention will be more specifically explained with reference to the working and control examples.

### EXAMPLES and CONTROLS:

### 1) Resin used:

①Poly(metaxylylene adipamide) (hereinafter will be referred to as "NMXD6"): MX Nylon 6007, a product of Mitsubishi Gas Chemical Company, Inc.; average molecular weight, 25,300
②Polyamide-6: "CAPLON® 8207 F", a product of Allied-Signal Co.; average molecular weight, 25,000
③Styrene·ethylene/butylene·styrene block copolymer: "KRATON® FG1901X", a product of Shell Chemical Co., Ltd.

### 2) Methods of blending NMXD6 with polyamide-6:

①Melt-mixing method-1:
   NMXD6 and polyamide-6 at a prescribed ratio were mixed in a tumbler, melt-kneaded in a twin-screw extruder at 290°C for 3 minutes to obtain a blend. The resultant blend was dried in vacuum at 80°C for at least 12 hours.
②Melt-mixing method-2:
   After mixing the two components in the manner similar to above, the resultant mixture was melt-kneaded at 260°C for 3 minutes to obtain a blend. The blend was dried in the same manner as above.
③Solution method:
   NMXD6 and polyamide-6 at a prescribed ratio were dissolved in trifluoroethanol solvent, co-precipitated in diethylether, and the resulting co-precipitate was dried in vacuum at 80°C for at least 12 hours.
      (The injection molding machine used in the occasion of above melt-kneading in ①and ②above was Allrunder 305-210-700 manufactured by ARBURG.)

### 3) Thermal analysis:

DSC process was employed. The instrument used was DSC-7 manufactured by Perkin Elmer Co.

### 4) Evaluation of mechanical properties:

- Modulus of elasticity:: ASTM D638
- Yield stress:: ASTM D638
- Elongation at break:: ASTM D638
- Izod impact strength:: ASTM D256
(1/8 in. notched)

### EXAMPLE 1

By means of DSC process, glass transition temperatures of the polyamide resins obtained through the above various blending methods were measured.

The instrument used for the measurement:
DSC-7 manufactured by Perkin Elmer Co.

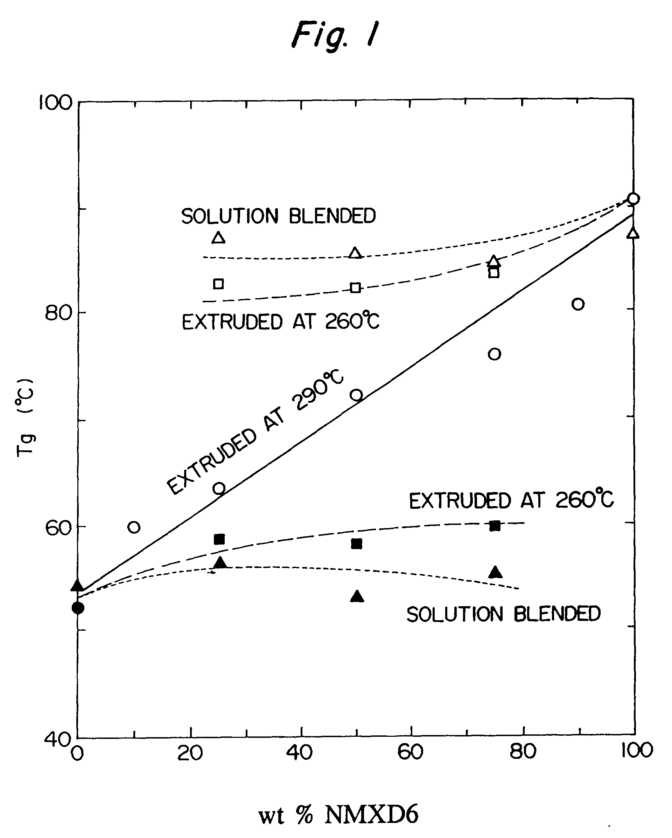

The results of the measurements are shown in Table 1. The results in Table 1 are illustrated in Fig. 1.

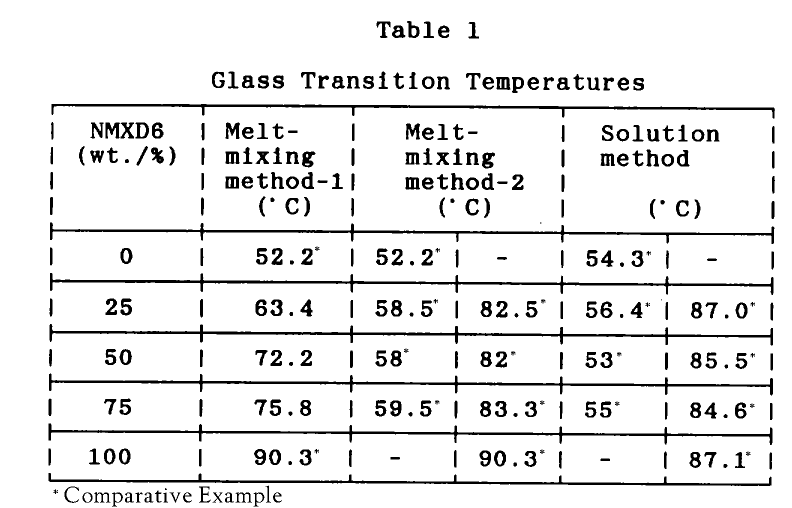

### EXAMPLE 2

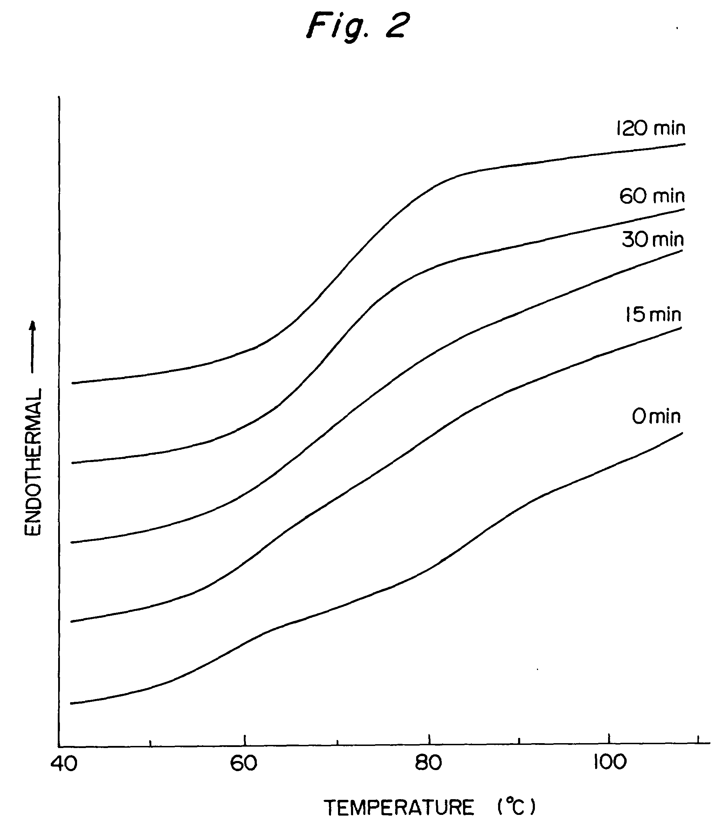

Equal amounts of NMXD6 and polyamide-6 were mixed by the solution method to provide test samples, which were heat-treated at 260° C in DSC for 0, 15, 30, 60 and 120 minutes. After cooling, their DSC diagrams were measured while heating them from 40°C to 120° C. The resultant diagrams are shown in Fig. 2.

From Fig. 2 it can be seen that the samples which were heat-treated at 260°C for 0 minute and 15 minutes had two glass transition temperatures because the molten reaction has not yet sufficiently progressed. Whereas, the samples which were heat-treated for 30 minutes or longer came to have single glass transition temperature, indicating that the molten reaction has considerably progressed.

### EXAMPLE 3

A 50:50 (by volume) mixture of NMXD6 and polyamide-6 was melt-kneaded, and the relation of the Tg to the annealing time was obtained, using a temperature as a parameter.

The samples were prepared by the solution method free of thermal treatment, at NMXD6/polyamide-6=50/50. The annealing was conducted with the use of DSC.

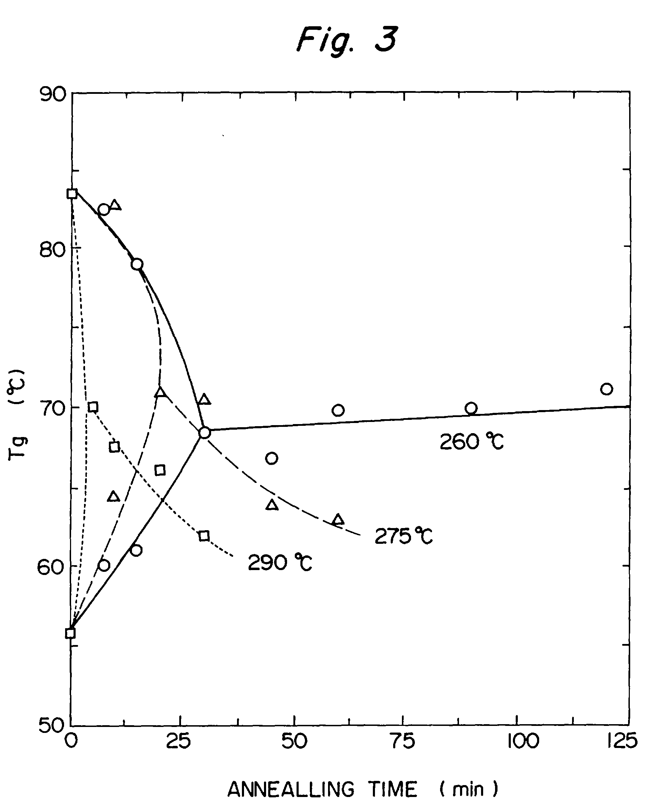

The results are shown in Fig. 3.

From Fig. 3 it can be understood that the higher the annealing temperature the shorter the time required for the reaction product to come to have a single glass transition temperature. It can also be understood that the single glass transition temperature varies as the annealing time is prolonged.

### EXAMPLE 4

NMXD6 and polyamide-6 were blended at prescribed ratios and melt-kneaded at 290°C for 3 minutes to be given a homogeneous phase to provide samples of first group. Same samples were further heat-treated (100°C, 18 hrs.) to provide samples of second group. Their mechanical strength properties (modulus of elasticity and yield stress) and elongation at break were measured.

The results are shown in Table 2 below.

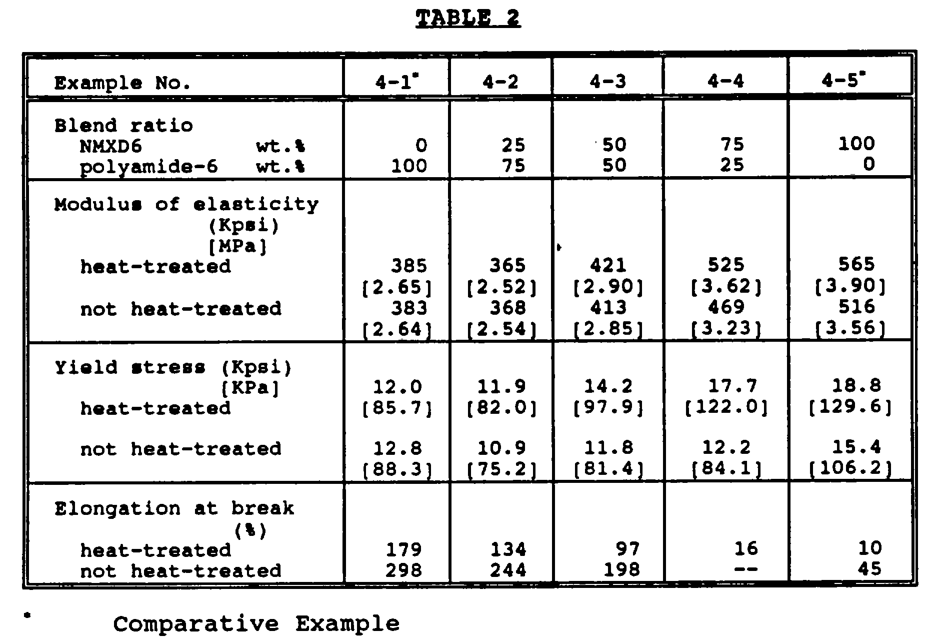

As should be clear from Table 2, modulus of elasticity and yield stress are increased by the heat treatment, but the influence of the heat treatment decreases with increase of polyamide-6 concentration.

Whereas, the elongation at break shows a tendency to be reduced by the heat treatment.

These effects are considered to be attributable to the low crystallinity of NMXD6 immediately after molding.

### EXAMPLE 5

Prescribed amounts of NMXD6 and polyamide-6 were mixed in a tumbler and melt-kneaded in a twin-screw extruder at 290° C for 3 minutes to provide pelletized molding materials.

The materials were blended with a prescribed amount of maleic anhydride-modified and hydrogenated styrene·ethylene/butylene·styrene block copolymer (KRATON® FG1901X, a product of Shell Chemical Co., Ltd.) and melt-kneaded at 260°C in the manner similar to above to provide pelletized molding materials.

The molding materials were injection-molded at 260°C to provide samples for evaluation tests, which were subsequently heat-treated (100°C, 18 hours) and given the evaluation tests.

The results are collectively shown in Tables 3 and 4.

With the increased in the amount of KRATON® FG1901X (MA-SEBS), the modulus of elasticity and yield stress somewhat decreased, but Izod impact strength showed remarkable improvement.

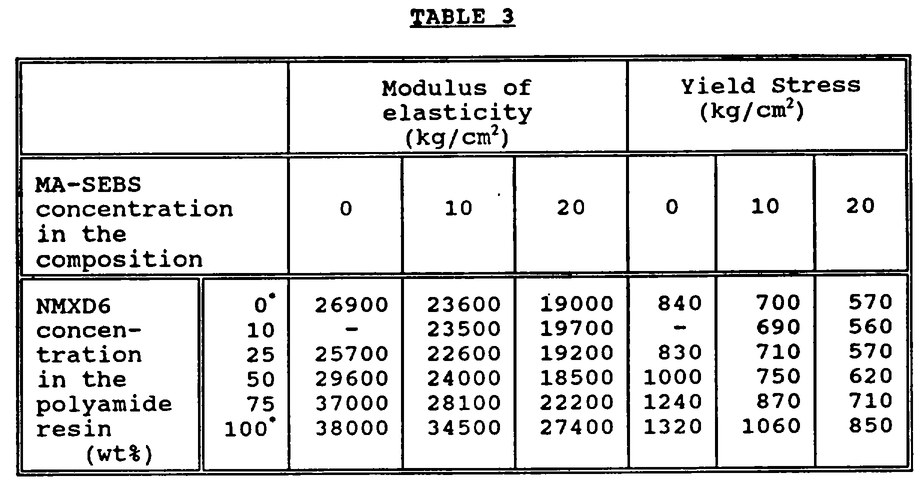

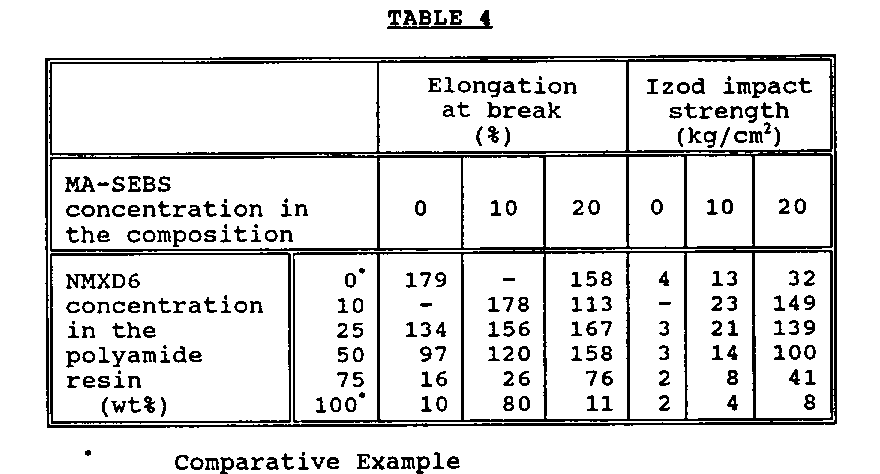

### EXAMPLE 6

In order to investigate the state of dispersion of the elastomer particles in the polyamide resin composition of the present invention, the following components at the ratios specified in the table below were melt-kneaded (290°C, 3 min.) to form each a molten mixture having a single glass transition temperature (having a homogeneous phase) and micrographs of the molded article, which was molded from the molten mixture, were taken.

| Component | Blend ratio (part by weight) | | | | |
|---|---|---|---|---|---|
| | 6-1 | 6-2 | 6-3 | 6-4 | 6-5 |
| Polyamide-6 | 80 | 60 | 40 | 20 | 0 |
| NMXD6 | 0 | 20 | 40 | 60 | 80 |
| Elastomer | 20 | 20 | 20 | 20 | 20 |
| Sample No. | N100R20 | N75R20 | N50R20 | N25R20 | N0R20 |

From the cross-section perpendicular to the sample flow direction at the central part of each test piece (14 x 3 x 140 mm) an about 0.1 µm-thick slice was cut off and photographed with a transmission-type electron microscope.

The transmission-type electron microscope employed:
JEM-2000FX, manufactured by Nihon Denshi K.K

Measuring condition:
Accelerating voltage: 200 kv

The micrograph of Sample No. N100R20 shows that the elastomer particles having a diameter of about 0.1 µm are homogeneously dispersed. In the micrographs of Samples Nos. N75R20 and N50R20, it is seen that the most of the dispersed elastomer particles have spherical shape having a diameter of about 0.1 to 0.3 µm or indefinite shape. Further, in the micrographs of Samples Nos.N25R20 and N0R20, it is observed that the most of the dispersed elastomer have a spherical shape having a diameter of about 0.2 to 0.6 µm and as particles of indefinite shape.

## Claims

1. A polyamide resin which is obtainable by melt-reacting a mixture composed of 10 - 90% by weight of a polyamide (A1) obtainable from xylylenediamine and a C₆-C₂₀ α, ω-linear aliphatic dibasic acid and 90 - 10% by weight of polyamide-6 (A2), and which has either
a single glass transition temperature differing from those of (A1) and (A2), or
two glass transition temperatures both differing from those of (A1) and (A2), the difference between the two temperatures being less than 10°C, (the glass transition temperature being measured by the DSC process at a temperature rise rate of 20°C/min).

2. A polyamide resin according to claim 1 in which the C₆-C₂₀ α,ω-linear aliphatic dibasic acid in the polyamide (A1) is adipic acid.

3. A polyamide resin according to claim 1 or 2 in which the polyamide (A1) has a number average molecular weight of between 10,000 and 50,000.

4. A polyamide resin according to claim 1, 2 or 3 in which the polyamide-6 (A2) has a number average molecular weight of between 10,000 and 50,000.

5. A polyamide resin according to any one of the preceding claims in which the molten reaction mixture comprises 20-80% by weight of polyamide (A1) and 80-20% by weight of polyamide-6 (A2).

6. A polyamide resin according to any one of the preceding claims in which said single glass transition temperature or at least one of the two glass transition temperatures differing by less than 10°C is within the range of 70 ± 5°C.

7. A reinforced polyamide resin composition comprising
(A) 100 parts by weight of a polyamide resin as claimed in any one of the preceding claims, and
(B) 5 to 80 parts by weight of an elastomer.

8. A composition according to claim 7 in which the elastomer is a modified elastomer, the elastomer being composed of polymer blocks (B1) consisting essentially of vinyl aromatic compound units and polymer blocks (B2) consisting essentially of conjugated diene compound units and having been modified with an unsaturated dicarboxylic acid or a derivative thereof and hydrogenated.

9. A composition according to claim 8 in which the unsaturated dicarboxylic acid is a C₄-C₁₆ unsaturated dicarboxylic acid.

10. A composition according to claim 8 in which the derivative of an unsaturated dicarboxylic acid is maleic anhydride.

11. A composition according to claim 8, 9 or 10 in which the vinyl aromatic compound is of the formula 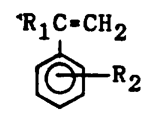 in which R₁ and R₂ represent independently from each other a hydrogen atom or a C₁-C₅ alkyl group.

12. A composition according to claim 11 in which the vinyl aromatic compound is styrene.

13. A composition according to any one of claims 8 to 12 in which the conjugated diene compound is of the formula 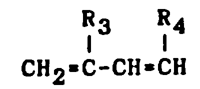 in which R₃ and R₄ represent independently from each other a hydrogen atom or a C₁-C₅ alkyl group.

14. A composition according to claim 13 in which the conjugated diene compound is butadiene or isoprene.

15. A composition according to any one of claims 8 to 14 in which the polymer block (B2) is composed of the conjugated diene compound units only.

16. A composition according to any one of claims 8 to 14 in which the polymer block (B2) is composed of a copolymer of a major amount of conjugated diene compound units and a minor amount of olefin units.

17. A composition according to any one of claims 8 to 16 in which the weight ratio of the block (B1)/block (B2) is from 15/85 to 60/40.

18. A composition according to any one of claims 8 to 17 in which the copolymer blocks (B1) and (B2) form an A-B-A type block copolymerized elastomer.

19. A composition according to any one of claims 7 to 18 which is composed of 100 parts by weight of the polyamide resin (A) and 10-50 parts by weight of the elastomer (B).

20. Shaped articles of a composition as claimed in any one of claims 7 to 19.

## Patentansprüche

1. Polyamidharz, das erhältlich ist durch Schmelzreaktion eines Gemisches, bestehend aus 10 - 90 Gew.-% eines Polyamids (A1), erhältlich aus Xylylendiamin und einer linearen alphatischen α-ω-zweibasischen C₆-C₂₀-Säure und 90 - 10 Gew.-% Polyamid-6 (A2) und das entweder
eine einzige Glasübergangstemperatur, die sich von derjenigen von (A1) und (A2) unterscheidet, oder
zwei Glasübergangstemperaturen, die sich beide von denjenigen von (A1) und (A2) unterscheiden, besitzt, wobei der Unterschied zwischen den beiden Temperaturen weniger als 10°C beträgt (die Glasübergangstemperatur wird gemessen nach dem DSC-Verfahren bei einer Temperaturanstiegs-Geschwindigkeit von 20°C/min).

2. Polyamidharz nach Anspruch 1, wobei die lineare aliphatische α-ω-zweibasische C₆-C₂₀-Säure in dem Polyamid (A1) Adipinsäure ist.

3. Polyamidharz nach Anspruch 1 oder 2, wobei das Polyamid (A1) ein zahlenmäßiges mittleres Molekulargewicht zwischen 10.000 und 50.000 besitzt.

4. Polyamidharz nach Anspruch 1, 2 oder 3, wobei das Polyamid-6 (A2) ein zahlenmäßiges mittleres Molekulargewicht zwischen 10.000 und 50.000 besitzt.

5. Polyamidharz nach einem der vorangehenden Ansprüche, wobei das geschmolzene Reaktionsgemisch 20 bis 80 Gew.-% Polyamid (A1) und 80 bis 20 Gew.-% Polyamid-6 (A2) enthält.

6. Polyamidharz nach einem der vorangehenden Ansprüche, wobei die einzige Glasübergangstemperatur oder mindestens eine der beiden Glasübergangstemperaturen, die sich um weniger als 10°C unterscheiden, im Bereich von 70 ± 5°C liegt.

7. Verstärkte Polyamidharzmasse, umfassend
(A) 100 Gewichtsteile eines Polyamidharzes nach einem der vorangehenden Ansprüche und
(B) 5 bis 80 Gewichtsteile eines Elastomers.

8. Masse nach Anspruch 7, wobei das Elastomer ein modifiziertes Elastomer ist und wobei das Elastomer besteht aus Polymerblöcken (B1), bestehend im wesentlichen aus Einheiten einer vinylaromatischen Verbindung, und Polymerblöcken (B2), bestehend im wesentlichen aus Einheiten einer konjugierten DienVerbindung, und modifiziert worden ist mit einer ungesättigten Dicarbonsäure oder einem Derivat davon und hydriert worden ist.

9. Masse nach Anspruch 8, wobei die ungesättigte Dicarbonsäure eine ungesättigte C₄-C₁₆-Dicarbonsäure ist.

10. Masse nach Anspruch 8, wobei das Derivat einer ungesättigten Dicarbonsäure Maleinsäureanhydrid ist.

11. Masse nach Anspruch 8, 9 oder 10, wobei die vinylaromatische Verbindung die Formel 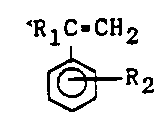 besitzt, wobei R₁ und R₂ unabhängig voneinander ein Wasserstoffatom oder eine C₁-C₅-Alkylqruppe bedeuten.

12. Masse nach Anspruch 11, wobei die vinylaromatische Verbindung Styrol ist.

13. Masse nach einem der Ansprüche 8 bis 12, wobei die konjugierte Dienverbindung die Formel 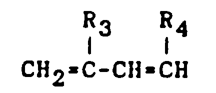 besitzt, wobei R₃ und R₄ unabhängig voneinander ein Wasserstoffatom oder eine C₁-C₅-Alkylgruppe bedeuten.

14. Masse nach Anspruch 13, wobei die konjugierte Dienverbindung Butadien oder Isopren ist.

15. Masse nach einem der Ansprüche 8 bis 14, wobei der Polymerblock (B2) nur aus Einheiten der konjugierten Dienverbindung besteht.

16. Masse nach einem der Ansprüche 8 bis 14, wobei der Polymerblock (B2) aus einem Copolymer mit einer Hauptmenge an Einheiten der konjugierten Dienverbindung und einer geringeren Menge Olefineinheiten besteht.

17. Masse nach einem der Ansprüche 8 bis 16, wobei das Gewichtsverhältnis von Block (B1) zu Block (B2) 15/85 bis 60/40 beträgt.

18. Masse nach einem der Ansprüche 8 bis 17, wobei die Copolymerblöcke (B1) und (B2) ein blockcopolymerisiertes Elastomer vom Typ A-B-A bilden.

19. Masse nach einem der Ansprüche 7 bis 18, bestehend aus 100 Gewichtsteilen des Polyamidharzes (A) und 10 - 50 Gewichtsteilen des Elastomers (B).

20. Formkörper aus einer Masse nach einem der Ansprüche 7 bis 19.

## Revendications

1. Résine de polyamide que l'on peut obtenir en faisant réagir à l'état fondu un mélange constitué de 10 à 90% en poids d'un polyamide (A1) préparable à partir de xylylènediamine et d'un acide aliphatique linéaire α,ω-dicarboxylique en C₆ à C₂₀, et de 90 à 10% en poids de polyamide-6 (A2), ledit mélange ayant soit une seule température de transition vitreuse, différente de celles de (A1) et (A2), soit deux températures de transition vitreuse, toutes deux différentes de celles de (A1) et (A2), la différence entre les deux températures étant inférieure à 10°C (la température de transition vitreuse étant mesurée par ACD à une vitesse de montée de la température de 20°C par minute).

2. Résine de polyamide selon la revendication 1, pour laquelle l'acide aliphatique linéaire α,ω-dicarboxylique en C₆ à C₂₀ du polyamide (A1) est l'acide adipique.

3. Résine de polyamide selon la revendication 1 ou 2, pour laquelle le polyamide (A1) présente une masse moléculaire moyenne en nombre comprise entre 10.000 et 50.000.

4. Résine de polyamide selon l'une quelconque des revendications 1 à 3, pour laquelle le polyamide-6 (A2) présente une masse moléculaire moyenne en nombre comprise entre 10.000 et 50.000.

5. Résine de polyamide selon l'une quelconque des revendications précédentes, pour laquelle le mélange de réaction fondu renferme 20 à 80% en poids de polyamide (A1) et 80 à 20% en poids de polyamide-6 (A2).

6. Résine de polyamide selon l'une quelconque des revendications précédentes, pour laquelle ladite température de transition vitreuse unique ou au moins l'une des deux températures de transition vitreuse différant de moins de 10°C, est comprise dans l'intervalle 70 ± 5°C.

7. Composition de résine de polyamide renforcée, comprenant :
(A) 100 parties en poids d'une résine de polyamide telle que revendiquée dans l'une quelconque des revendications précédentes, et
(B) 5 à 80 parties en poids d'un élastomère.

8. Composition selon la revendication 7, dans laquelle l'élastomère est un élastomère modifié, l'élastomère étant composé de blocs polymères (B1) constitués essentiellement de motifs du type composé vinylique aromatique, et de blocs polymères (B2) constitués essentiellement de motifs diène conjugué, et ayant été modifié par un acide dicarboxylique insaturé ou un dérivé d'un tel acide, et hydrogéné.

9. Composition selon la revendication 8, pour laquelle l'acide dicarboxylique insaturé est un acide dicarboxylique insaturé en C₄ à C₁₆.

10. Composition selon la revendication 8, pour laquelle le dérivé d'acide dicarboxylique insaturé est l'anhydride maléique.

11. Composition selon l'une quelconque des revendications 8 à 10, pour laquelle le composé vinylique aromatique est un composé de formule : 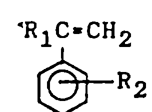 dans laquelle R₁ et R₂ représentent chacun, indépendamment l'un de l'autre, un atome d'hydrogène ou un groupe alkyle en C₁ à C₅.

12. Composition selon la revendication 11, pour laquelle le composé vinylique aromatique est le styrène.

13. Composition selon l'une quelconque des revendications 8 à 12, pour laquelle le diène conjugué est un composé de formule : 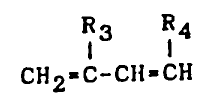 dans laquelle R₃ et R₄ représentent chacun, indépendamment l'un de l'autre, un atome d'hydrogène ou un groupe alkyle en C₁ à C₅.

14. Composition selon la revendication 13, pour laquelle le diène conjugué est le butadiène ou l'isoprène.

15. Composition selon l'une quelconque des revendications 8 à 14, pour laquelle le bloc polymère (B2) est constitué uniquement des motifs diène conjugué.

16. Composition selon l'une quelconque des revendications 8 à 14, pour laquelle le bloc polymère (B2) est constitué d'un copolymère comprenant une quantité majeure de motifs diène conjugué et une quantité mineure de motifs oléfine.

17. Composition selon l'une quelconque des revendications 8 à 16, pour laquelle le rapport en poids du bloc (B1) au bloc (B2) est de 15/85 à 60/40.

18. Composition selon l'une quelconque des revendications 8 à 17, pour laquelle les blocs (B1) et (B2) copolymérisés forment un élastomère copolymérisé séquencé du type A-B-A.

19. Composition selon l'une quelconque des revendications 7 à 18, qui est composée de 100 parties en poids de la résine de polyamide (A) et de 10 à 50 parties en poids de l'élastomère (B).

20. Article façonné, obtenu à partir d'une composition telle que revendiquée dans l'une quelconque des revendications 7 à 19.
